# EUROPEAN PATENT APPLICATION

(11) **EP 1 051 055 A2**
(43) Date of publication of application: **08.11.2000**
(21) Application number: 00105784.3
(22) Date of filing: 18.03.2000
(51) Int. Cl.: H04Q 11/00, H04J 14/00

(54) **System and method for eliminating the capacity required for protection of an optical line system**

(30) Priority: 06.05.1999 US 306316
(71) Applicant: ALCATEL, 75008 Paris (FR)
(72) Inventor: Ester, Gary W., Plano, Texas 75023 (US)
(74) Representative: Fuhlendorf, Jörn, Dipl.-Ing.

(57) **Abstract**

The system and method for eliminating the capacity required for protection of a line system includes a first tributary located on a first side of an optical line system. The first tributary carries an electrical signal into a first working multiplexer. The first tributary also has a first tributary switch which may be used to redirect the electrical signal around the first working multiplexer. If the first working multiplexer is functioning properly, the first working multiplexer multiplexes the electrical signal to the appropriate line rate and the signal is transmitted through the first working multiplexer to a first optical switch located on a first optical fiber, and then into an optical network. The optical network is located between the first and a second side of the optical line system.

If the first working multiplexer fails, a microprocessor detects the failure, activates the first tributary switch and the first optical switch, and coordinates the rerouting of the signal from the first tributary through a first protection multiplexer. The first protection multiplexer multiplexes the signal to the required line rate and the signal is transmitted to the first optical switch located on the first optical fiber. The signal is then transmitted into the optical network. Once the signal passes through the optical network, the signal is transmitted to a second working multiplexer on a second optical fiber. Finally, the signal is transmitted onto a second tributary. The system and method of the present invention is expandable to provide protection to any number of working channels using the protection multiplexer.

## Description

### TECHNICAL FIELD OF THE INVENTION

The present invention relates generally to optical line systems. In particular, this invention relates to a system and method for eliminating the bandwidth and associated equipment required for protecting channels in optical line systems.

### BACKGROUND OF THE INVENTION

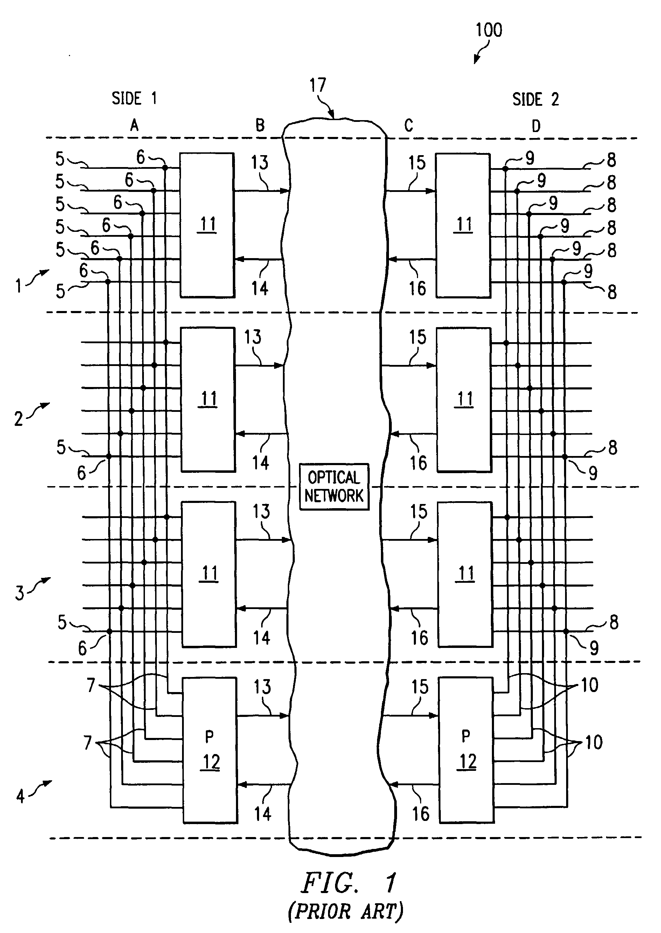

The use of protection channels in optical line systems are well known in the art. An example of a prior art optical line system is shown in FIGURE 1. In the prior art optical line system 100, low speed traffic at point A in the optical line network, enters a line system to multiplex it to the required line rate at point B. In this example, FIGURE 1 shows three working channels 10 15 and 20 and one protection channel 25 P. The protection channel is designated for protecting the three working channels. The protection channel 25 does not normally carry traffic, but is held in reserve until a failure takes place in one of the working channels. Protection of the optical line system 100 is an event that is coordinated by both ends of the line system. Communication is carried over the protection channel that allows both a first side and a second side of the prior art optical line system to switch the traffic from a working channel to the protection channel in a coordinated fashion. In the prior art optical line system shown in FIGURE 1, protection of the optical line system is from point A to point D. All associated equipment between points A and D for the working channel are bypassed, and all associated equipment between points A and D of the protection channel are used.

One problem with the prior art optical line system 100 shown in FIGURE 1, is that the protection channel 25 requires that 25% of the bandwidth of the optical span and its associated equipment be allocated to the protection of the end line system. Allocating all the equipment between points A and D of FIGURE 1 just to protect a single channel is very costly. Even the most cost effective way of constructing a protection channel, laying optical fiber in the ground, would still cost around $11,000 per kilometer.

Another problem with the prior art is that if a working channel breaks down, the protection channels at side one and side two of the prior art optical line system must be used. The prior art optical line system cannot handle the scenario where channel 1 breaks down on side one and channel 2 breaks down on side two.

### SUMMARY OF THE INVENTION

The present invention provides a system and method for eliminating the capacity required for protection of a line system.

More specifically, the present invention provides a system and method for eliminating the bandwidth and associated equipment required for protecting channels in optical line systems. The system and method for eliminating the capacity required for protection of a line system includes a first tributary located on a first side of an optical line system. The first tributary carries an electrical signal into a first working multiplexer. The first tributary also has a first tributary switch which may be used to redirect the electrical signal around the first working multiplexer. If the first working multiplexer is functioning properly, the first working multiplexer multiplexes the electrical signal to the appropriate line rate and the signal is transmitted through the first working multiplexer to a first optical switch located on a first optical fiber, and then into an optical network. The optical network is located between the first and a second side of the optical line system.

If the first working multiplexer fails, a microprocessor detects the failure, activates the first tributary switch and the first optical switch, and coordinates the rerouting of the signal from the first tributary through a first protection multiplexer. The first protection multiplexer multiplexes the signal to the required line rate and the signal is transmitted to the first optical switch located on the first optical fiber. The signal is then transmitted into the optical network. Once the signal passes through the optical network, the signal is transmitted to a second working multiplexer on a second optical fiber. Finally, the signal is transmitted onto a second tributary. The system and method of the present invention is expandable to provide protection to any number of working channels using the protection multiplexer.

The present invention provides an important technical advantage by providing a way of protecting a working channel locally instead of having to protect the working channel throughout the entire optical line system. Protecting the working channel locally eliminates the need to lay fiber for a complete protection channel, thus resulting in a significant cost savings.

The present invention provides an important technical advantage by adding an extra working channel within the optical line system resulting in a 25% increase in network capacity.

The present invention provides an important technical advantage by making the protection multiplexers on side one and side two of the optical line system independent from one another.

### BRIEF DESCRIPTION OF THE DRAWINGS

For a more complete understanding of the present invention and the advantages thereof, reference is now made to the following description taken in conjunction with the accompanying drawings in which like reference numerals indicate like features and wherein:
FIGURE 1 shows a depiction of a prior art optical line system; and
FIGURE 2 shows one embodiment of the system and method for eliminating the capacity required for protection of an optical line system according to the present invention.

### DETAILED DESCRIPTION OF THE INVENTION

Preferred embodiments of the present invention are illustrated in the FIGURES, like numerals being used to refer to like and corresponding parts of the various drawings.

The system and method for eliminating the capacity required for protection of a line system includes a first tributary located on a first side of an optical line system. The first tributary carries an electrical signal into a first working multiplexer. The first tributary also has a first tributary switch which may be used to redirect the electrical signal around the first working multiplexer. If the first working multiplexer is functioning properly, the first working multiplexer multiplexes the electrical signal to the appropriate line rate and the signal is transmitted through the first working multiplexer to a first optical switch located on a first optical fiber, and then into an optical network. The optical network is located between the first and a second side of the optical line system.

If the first working multiplexer fails, a microprocessor detects the failure, activates the first tributary switch and the first optical switch, and coordinates the rerouting of the signal from the first tributary through a first protection multiplexer. The first protection multiplexer multiplexes the signal to the required line rate and the signal is transmitted to the first optical switch located on the first optical fiber. The signal is then transmitted into the optical network. Once the signal passes through the optical network, the signal is transmitted to a second working multiplexer on a second optical fiber. Finally, the signal is transmitted onto a second tributary. The system and method of the present invention is expandable to provide protection to any number of working channels using the protection multiplexer.

FIGURE 1 shows a depiction of the prior art optical line system 100 comprising multiple working channels 1, 2, and 3 and protection channel 4. On a first side of the prior art optical line system 100, working channel 1 comprises tributaries 5 all connected to a working multiplexer 11. The working multiplexer 11 is also connected to an optical network 17 by optical fibers 13 and 14. The working multiplexer 11 transmits data to and receives data from the optical network 17 on optical fibers 13 and 14 respectively. Working channels 2 and 3 located on the first side of prior art optical line system 100 operate in the same manner as working channel 1.

Each tributary 5 located on working channels 1, 2 and 3 are connected to tributaries 7 at tributary switches 6. Tributaries 7 are all connected to a protection multiplexer 12. The protection multiplexer 12 is also connected to the optical network 17 through optical fibers 13 and 14. The protection multiplexer 12 transmits and receives data to and from the optical network 17 on optical fibers 13 and 14 respectively. The optical network 17 is located between the first side and a second side of the prior art optical line system 100.

On the second side of the prior art optical line system 100, working channel 1 comprises tributaries 8 all connected to the working multiplexer 11. The working multiplexer 11 is also connected to the optical network 17 by optical fibers 15 and 16. The working multiplexer 11 transmits data to and receives data from the optical network 17 on optical fibers 16 and 15 respectively. Working channels 2 and 3 located on the second side of prior art optical line system 100 operate in the same manner as working channel 1.

Each tributary 8 located on working channels 1, 2 and 3 are connected to tributaries 10 at tributary switches 9. Tributaries 10 are all connected to the protection multiplexer 12. The protection multiplexer 12 is also connected to the optical network 17 through optical fibers 15 and 16. The protection multiplexer 12 transmits and receives data to and from the optical network 17 on optical fibers 16 and 15 respectively.

Under normal operation, optical signals travel completely through the prior art optical line system 100 on any one of the working channels 1, 2, or 3. For example, on the working channel 1, signals are transmitted into working multiplexer 11 through tributaries 5. These signals may either be electrical or optical signals. These signals are then multiplexed to the required line rate and transmitted into the optical network 17 through optical fiber 13. On side two of the optical line system 100, the optical signals are received in the working multiplexer 11 through optical fiber 15. Finally, the optical signals are demultiplexed at working multiplexer 11 and transmitted on to tributaries 8.

However, if any of the working multiplexers 11 in channels 1, 2 or 3 fail, the signals must take an alternate route through the optical line system 100. For example, if the working multiplexer 11 fails, the optical signals on tributaries 5 are transmitted onto tributaries 7 at tributary switches 6 and routed through protection multiplexer 12. The optical signals are then carried from side one of the prior art optical line system 100 to side two of the prior art optical line system 100 through protection channel 4. Note that the protection channel 4 can only protect one working channel at a time.

Although the prior art optical line system 100 does provide protection when the local optical line system equipment fails, it does so at a very high cost. In protecting the local equipment located on either the first or second side of the prior art optical line system 100, the prior art optical line system 100 utilizes the entire protection channel 4. Constructing any of the working channels 1, 2, or 3 and the protection channel 4 is very costly. Even the most cost effective way of constructing either a working channel or a protection channel, plowing and placing optical fiber 15 or 16 in the ground, will cost approximately $11,000 per kilometer.

Besides the high cost, the prior art optical line system 100 also has other limitations. The protection channel 4 can only protect one working channel at a time. Furthermore, the protection multiplexer 12 located on the first side of the prior art optical line system 100 is not independent from the protection multiplexer 12 located on the second side of the prior art optical line system 100. For example, if working multiplexer 11 on working channel 1 located on side one of the prior art optical line system 100 fails, the signals must be rerouted around the failed working multiplexer through protection channel 4. In rerouting the signals through the protection channel 4, both the protection multiplexers 12 on the first side and the second side of the prior art optical line system 100 must be utilized. The signals will bypass the working multiplexer 11 of channel 1 on side two of the prior art optical line system 100 even though it is working properly.

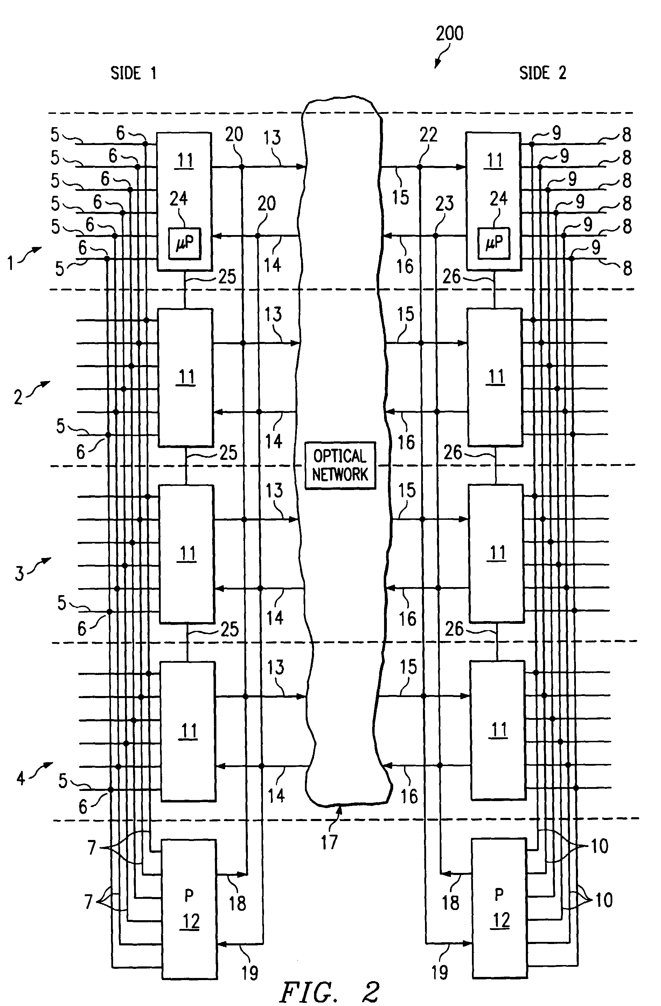

FIGURE 2 shows one embodiment of the system and method for eliminating the capacity required for protection of an optical line system 200 comprising multiple working channels 1, 2, 3 and 4. On a first side of the system and method for eliminating the capacity required for protection of an optical line system 200, working channel 1 comprises tributaries 5 all connected to a working multiplexer 11. The working multiplexer 11 is also connected to an optical network 17 by optical fibers 13 and 14. The working multiplexer 11 transmits data to and receives data from the optical network 17 on optical fibers 13 and 14 respectively. Working channels 2, 3, and 4 located on the first side of the system and method for eliminating the capacity required for protection of an optical line system 200 operate in the same manner as working channel 1.

Each tributary 5 located on working channels 1, 2, 3, and 4 are connected to tributaries 7 at tributary switches 6. Tributaries 7 are all connected to a protection multiplexer 12. The protection multiplexer 12 is connected to the optical fibers 13 and 14 at optical switches 20 and 21 respectively by optical fiber connectors 18 and 19 respectively. Optical switches 20 and 21 make up an optical switch pair. The protection multiplexer 12 is also connected to the optical fibers 13 and 14 at similar optical switches 20 and 21 located on channels 2, 3 and 4. A microprocessor 24 is located within and connected to the working multiplexer 11. The microprocessor 24 is also electrically connected to the working multiplexers 11 located in channels 2, 3, and 4 by microprocessor connector 25. The optical network 17 is located between the first side and a second side of the optical line system 200.

On the second side of the system and method for eliminating the capacity required for protection of an optical line system 200, working channel 1 comprises tributaries 8 all connected to a working multiplexer 11. The working multiplexer 11 is also connected to an optical network 17 by optical fibers 15 and 16. The working multiplexer 11 transmits data to and receives data from the optical network 17 on optical fibers 16 and 15 respectively. Working channels 2, 3, and 4 located on the first side of the system and method for eliminating the capacity required for protection of an optical line system 200 operate in the same manner as working channel 1.

Each tributary 8 located on working channels 1, 2, 3, and 4 are connected to tributaries 10 at tributary switches 9. Tributaries 10 are all connected to a protection multiplexer 12. The protection multiplexer 12 is connected to the optical fibers 15 and 16 at optical switches 22 and 23 respectively by optical fiber connectors 18 and 19 respectively. Optical switches 22 and 23 make up an optical switch pair. The protection multiplexer 12 is also connected to the optical fibers 15 and 16 at similar optical switches 22 and 23 located on channels 2, 3 and 4. A microprocessor 24 is located within and connected to the working multiplexer 11. The microprocessor 24 is also connected to the working multiplexers 11 located in channels 2, 3, and 4 by microprocessor connectors 26. The optical network 17 is located between the first side and a second side of the optical line system 200.

Under normal operation, optical signals travel through the optical line system 200 of the present invention on either working channels 1, 2, 3, or 4. For example, on working channel 1, signals are transmitted into the working multiplexer 11 through tributaries 5. These signals may either be electrical or optical signals. These signals are then multiplexed to the required line rate and transmitted into the optical network 17 through optical fiber 13. If the signals transmitted into working multiplexer 11 through tributaries 5 are electrical signals, the working multiplexer 11 converts the electrical signals to optical signals before being output on to optical fiber 13. On side two of the optical line system 200, the signals are received at the working multiplexer 11 through optical fiber 15. Finally, the signals are demultiplexed by working multiplexer 11 and transmitted on to tributaries 8.

However, if any of the working multiplexers 11 fail, the optical signals must take an alternate route through the optical line system 200. For example, if working multiplexer 11 fails, microprocessor 24 detects the failure and sends a control signal to tributary switches 6 and optical switches 20 and 21 directing them to reroute the signals on tributaries 5 around the failed working multiplexer 11. The signals are first transmitted on to tributary 7 at tributary switches 6 and routed into the protection multiplexer 12. The signals are then multiplexed to the required line rate and transmitted to optical switch 20 through optical switch connector 18. If the signals transmitted into protection multiplexer 12 through tributaries 7 are electrical signals, the protection multiplexer 12 converts the electrical signals to optical signals before being output on to optical switch connector 18. Thus signals are rerouted around the failed working multiplexer 11 through protection multiplexer 12 and returned back to working channel 1. The only component bypassed on channel one is the working multiplexer 11. The remaining components of channel 1 are utilized. The protection multiplexer 12 on side one of the optical line system 200 can protect one working multiplexer on side one of the optical line system 200 at a time. Similarly, the protection multiplexer 12 on side two of the optical line system 200 can protect one working multiplexer on side two of optical line system 200 at a time. The signals would take the same route if any of the other working multiplexers on channels 2, 3, or 4 failed.

The optical line system 200 of the present invention operates in the same manner for optical signals entering the optical line system 200 at the tributaries 8 on side two of the optical line system 200 and traveling through the components of working channel 1 to side one of optical line system 200.

The optical line system 200 of the present invention shown in FIGURE 2 provides significant advantages over the prior art optical line system 100 shown in FIGURE 1. The optical line system 200 of the present invention accomplishes the same purpose as the prior art optical line system 100 at a great reduction in cost. The optical line system 200 of the present invention protects the local equipment of the optical line system 200 by rerouting the optical signals around the failed working multiplexer, but utilizes the remaining components of that working channel. This eliminates the need for an entire protection channel. Adding a protection multiplexer is significantly cheaper than laying the optical fiber required for a complete protection channel at $11,000 per kilometer.

Another major advantage the optical line system 200 of the present invention is that what used to be a protection channel may now be utilized as a working channel. By adding a protection multiplexer 12 to the optical line system as shown in FIGURE 2, the protection channel 4 of the prior art optical line system 100 may be utilized as another working channel, thus increasing the optical line capacity of the optical line system 200 by 25%.

Another major advantage of the present invention is that protection multiplexers 12 of FIGURE 2 are completely independent of one another. Protection multiplexer 12 on side one of optical line system 200 can be used to protect any one of the working multiplexers 11 on side one of the optical line system 200 and protection multiplexer 12 on side two of the optical line system 200 may be used to protect any one of the working multiplexers 11 on side two of the optical line system 200. This provides for 50% increased protection capacity in the optical line system 200.

In summary, the system and method for eliminating the capacity required for protection of a line system includes a first tributary located on a first side of an optical line system. The first tributary carries an electrical signal into a first working multiplexer. The first tributary also has a first tributary switch which may be used to redirect the electrical signal around the first working multiplexer. If the first working multiplexer is functioning properly, the first working multiplexer multiplexes the electrical signal to the appropriate line rate and the signal is transmitted through the first working multiplexer to a first optical switch located on a first optical fiber, and then into an optical network. The optical network is located between the first and a second side of the optical line system.

If the first working multiplexer fails, a microprocessor detects the failure, activates the first tributary switch and the first optical switch, and coordinates the rerouting of the signal from the first tributary through a first protection multiplexer. The first protection multiplexer multiplexes the signal to the required line rate and the signal is transmitted to the first optical switch located on the first optical fiber. The signal is then transmitted into the optical network. Once the signal passes through the optical network, the signal is transmitted to a second working multiplexer on a second optical fiber. Finally, the signal is transmitted onto a second tributary. The system and method of the present invention is expandable to provide protection to any number of working channels using the protection multiplexer.

Although the present invention has been described in detail, it should be understood that various changes, substitutions and alterations can be made hereto without departing from the spirit and scope of the invention as described by the appended claims.

## Claims

1. A system for eliminating the capacity required for the protection of an optical line system comprising:
a first tributary located on a first side of said optical line system operable to carry a signal;
a first working multiplexer located on said first side of said optical line system operable to receive said signal from said first tributary;
a first tributary switch located on said first tributary operable to redirect said signal around said first working multiplexer;
a first optical fiber located on said first side of said optical line system operable to carry said signal from said first working multiplexer to an optical network, said optical network operable to transmit said signal from said first side of said optical line system to a second side of said optical line system;
a first optical switch located on said first optical fiber operable to redirect said signal around said first working multiplexer;
a first protection multiplexer located on said first side of said optical line system operable to receive said signal from said first tributary switch upon failure of said first working multiplexer, said protection multiplexer further operable to transmit said signal to said first optical switch;
a first microprocessor operable to detect the failure of said first working multiplexer and reroute said signal from said first tributary switch, through said first protection multiplexer, and then to said first optical switch, said first microprocessor electrically connected to every working multiplexer on said first side of said optical line system;
a second working multiplexer located on said second side of said optical line system operable to receive said signal from said optical network;
a second optical fiber located on said second side of said optical line system operable to carry said signal from said optical network to said second working multiplexer; and
a second tributary located on said second side of said optical line system operable to receive said signal from said second working multiplexer.

2. The system for eliminating the capacity required for the protection of an optical line system of claim 1, further comprising:
a second optical switch located on said second side of said optical line system operable to redirect said signal around said second working multiplexer;
a second tributary switch located on said second tributary operable to redirect said signal around said second working multiplexer;
a second protection multiplexer operable to receive said signal from said second optical switch upon failure of said second working multiplexer, said second protection multiplexer further operable to transmit said signal to said second tributary; and
a second microprocessor operable to detect the failure of said second working multiplexer and reroute said signal from said second optical switch through said second protection multiplexer, and then to said second tributary, said first microprocessor electrically connected to every working multiplexer on said first side of said optical line system, said second tributary also connected to said second working multiplexer.

3. The system for eliminating the capacity required for the protection of an optical line system of claim 1, wherein said first tributary, said first working multiplexer, said first microprocessor, said first tributary switch, said first optical fiber, said first optical switch, said optical network, said second optical fiber, said second optical switch, said second working multiplexer, said second tributary, said second tributary switch and said second microprocessor all make up a first working channel.

4. The system for eliminating the capacity required for the protection of an optical line system of claim 1, wherein said first and second protection multiplexers protect a plurality of working multiplexers, further wherein said first and second protection multiplexers protect one working multiplexer at a time.

5. The system for eliminating the capacity required for the protection of an optical line system of claim 1, wherein said signal entering into said first working multiplexer or said first protection multiplexer can be an optical or an electrical signal.

6. The system for eliminating the capacity required for the protection of an optical line system of claim 1, wherein said first and second optical switches are high-speed optical interfaces.

7. The system for eliminating the capacity required for the protection of an optical line system of claim 1, wherein if the signal entering into said first working multiplexer from said first tributary is an electrical signal, said first working multiplexer will convert said signal to an optical signal.

8. The system for eliminating the capacity required for the protection of an optical line system of claim 1, wherein if the signal entering into said first protection multiplexer from said first tributary is an electrical signal, said first protection multiplexer will convert said signal to an optical signal.

9. The system for eliminating the capacity required for the protection of an optical line system of claim 1, wherein said first and second working multiplexers are identical to said first and second protection multiplexers.

10. The system for eliminating the capacity required for the protection of an optical line system of claim 1, wherein said first optical switch is associated with another optical switch on said first side of said optical line system forming a first optical switch pair, further wherein said second optical switch is associated with another optical switch on said second side of said optical line system forming a second optical switch pair.

11. The system for eliminating the capacity required for the protection of an optical line system of claim 10, wherein said first microprocessor operates both said first tributary switch and said first optical switch at the same time to bypass said first working multiplexer if said first working multiplexer fails.

12. The system for eliminating the capacity required for the protection of an optical line system of claim 10, wherein said second microprocessor operates both said second tributary switch and said second optical switch at the same time to bypass said second working multiplexer if said second working multiplexer fails.

13. The system for eliminating the capacity required for the protection of an optical line system of claim 1, wherein said first microprocessor is located in said first working multiplexer and said second microprocessor is located in said second working multiplexer.

14. The system for eliminating the capacity required for the protection of an optical line system of claim 13, wherein said first microprocessor located in said first working multiplexer controls all optical switches on said first side of said optical line system and said second microprocessor located in said second working multiplexer controls all optical switches on said second side of said optical line system.

15. The system for eliminating the capacity required for the protection of an optical line system of claim 1, wherein said first microprocessor and second microprocessor may be located any where within the structure of said optical line system and control any said working channel.

16. The system for eliminating the capacity required for the protection of an optical line system of claim 1, wherein software within said first microprocessor controls the switching of said first tributary switch and said first optical switch on said first side of said optical line system and software within said second microprocessor controls the switching of said second tributary switch and said second optical switch on said second side of said optical line system.

17. The system for eliminating the capacity required for the protection of an optical line system of claim 1, wherein said system may be implemented in an inter-exchange carrier, or in any carrier which has an optical network.

18. The system for eliminating the capacity required for the protection of an optical line system of claim 2, wherein said first tributary switch or said second tributary switch may be an optical or and electrical switch.

19. The method for eliminating the capacity required for the protection of an optical line system comprising the steps of:
carrying a signal on a first tributary located on a first side of said optical line system;
receiving said signal from said first tributary at a first working multiplexer located on said first side of said optical line system;
multiplexing said signal to the required line rate;
receiving said signal from said first working multiplexer at a first optical switch located on said first side of said optical line system;
receiving said signal from said first optical switch at an optical network, said optical network located between said first and a second side of said optical line system;
receiving said signal from said optical network at a second working multiplexer located on said second side of said optical line system;
detecting the failure of said first working multiplexer at a first microprocessor;
receiving said signal from a first tributary switch located on said first tributary at a first protection multiplexer located on said first side of said optical line system upon failure of said first working multiplexer;
multiplexing said signal to the required line rate; and
transmitting said optical signal from said protection multiplexer to said first optical switch and then to said optical network.

20. The method for eliminating the capacity required for the protection of an optical line system of claim 19, further comprising the steps of:
receiving said signal from said optical network at a second optical switch located on said second side of said optical line system;
transmitting said signal from said second optical switch to said second working multiplexer;
multiplexing said signal to the required line rate;
transmitting said signal from said second protection multiplexer to a second tributary located on said second side of said optical line system;
detecting the failure of said second working multiplexer at a second microprocessor;
receiving said signal at a second protection multiplexer from said second optical switch upon failure of said second working multiplexer;
multiplexing said signal to the required line rate; and
transmitting said signal from said second protection multiplexer to a second tributary located on a second side of said optical line system.

21. The method for eliminating the capacity required for the protection of an optical line system of claim 19, wherein said first and second protection multiplexers protect a plurality of working multiplexers, further wherein said first and second protection multiplexers protect one working channel at a time.

22. The method for eliminating the capacity required for the protection of an optical line system of claim 19, wherein the signal entering into said first working multiplexer or said first protection multiplexer can be an optical or an electrical signal.

23. The method for eliminating the capacity required for the protection of an optical line system of claim 19, wherein said first and second optical switches are high-speed optical interfaces.

24. The method for eliminating the capacity required for the protection of an optical line system of claim 19, further comprising the step of converting the signal passing through said first working multiplexer to an optical signal if said signal entering into said first working multiplexer is an electrical signal.

25. The method for eliminating the capacity required for the protection of an optical line system of claim 19, further comprising the step of converting the signal passing through said second working multiplexer to an optical signal if said signal entering into said second working multiplexer is an electrical signal.

26. The method for eliminating the capacity required for the protection of an optical line system of claim 19, wherein said first and second working multiplexers are identical to said first and second protection multiplexers.

27. The method for eliminating the capacity required for the protection of an optical line system of claim 19, wherein said first optical switch is associated with another optical switch on said first side of said optical line system forming a first optical switch pair, further wherein said second optical switch is associated with another optical switch on said second side of said optical line system forming a second optical switch pair.

28. The method for eliminating the capacity required for the protection of an optical line system of claim 27, further comprising the step of said first microprocessor operating both said first tributary switch and said first optical switch at the same time to bypass said first working multiplexer if said first working multiplexer fails.

29. The method for eliminating the capacity required for the protection of an optical line system of claim 27, further comprising the step of said second microprocessor operating both said second tributary switch and said second optical switch at the same time to bypass said second working multiplexer if said second working multiplexer fails.

30. The method for eliminating the capacity required for the protection of an optical line system of claim 19, wherein said first microprocessor is located in said first working multiplexer and said second microprocessor is located in said second working multiplexer.

31. The method for eliminating the capacity required for the protection of an optical line system of claim 30, wherein said first microprocessor located in said first working multiplexer controls all optical switches on said first side of said optical line system and said second microprocessor located in said second working multiplexer control all optical switches on said second side of said optical line system.

32. The method for eliminating the capacity required for the protection of an optical line system of claim 19, wherein said first microprocessor and said second microprocessor may be located any where within the structure of said optical line system.

33. The method for eliminating the capacity required for the protection of an optical line system of claim 19, further comprising the step of controlling the switching of said optical switches on said first side of said optical line system using software within said first microprocessor and controlling the switching of said optical switches on said second side of said optical line system using software within said second microprocessor.

34. The method for eliminating the capacity required for the protection of an optical line system of claim 19, wherein said system may be implemented in an inter-exchange carrier, or in any carrier which has an optical network.
